# EUROPÄISCHE PATENTSCHRIFT

(11) **EP 3 630 381 B1**
(45) Veröffentlichungstag und Bekanntmachung des Hinweises auf die Patenterteilung: **17.08.2022**
(21) Anmeldenummer: 18735503.7
(22) Anmeldetag: 28.05.2018
(51) Int. Cl.: B21B 31/07

(54) **LAGERVERSCHLUSSVORRICHTUNG UND VERFAHREN ZU DEREN BETRIEB**
BEARING CLOSURE DEVICE AND METHOD FOR OPERATING SAME
DISPOSITIF DE FERMETURE DE ROULEMENT ET SON PROCÉDÉ DE FONCTIONNEMENT

(30) Priorität: 01.06.2017 DE 102017209304; 04.10.2017 DE 102017217562
(43) Veröffentlichungstag der Anmeldung: 08.04.2020
(73) Patentinhaber: SMS Group GmbH, 40237 Düsseldorf (DE)
(72) Erfinder: TUCAK, Andrej, 57482 Wenden-Brün (DE); KNIE, Daniel, 57258 Freudenberg (DE); WILL, Roland, 57482 Wenden (DE)
(74) Vertreter: Kross, Ulrich
(86) Internationale Anmeldenummer: PCT/EP2018/063895
(87) Internationale Veröffentlichungsnummer: WO 2018/219850

(56) Entgegenhaltungen:
- DE-B- 1 254 108
- FR-A- 1 254 487
- GB-A- 2 060 820
- US-A- 3 966 282

## Beschreibung

Die Erfindung betrifft eine Verschlussvorrichtung für ein Lager auf einem Walzenzapfen einer Walze zum Walzen von insbesondere metallischem Walzgut. Mit Hilfe des Lagers wird die Walze in einem Walzgerüst drehbar gelagert. Darüber hinaus betrifft die Erfindung ein Verfahren zum Betreiben der Lagerverschlussvorrichtung einerseits zum Aufziehen des Lagers auf den Walzenzapfen und andererseits zum Abziehen des Lagers von dem Walzenzapfen.

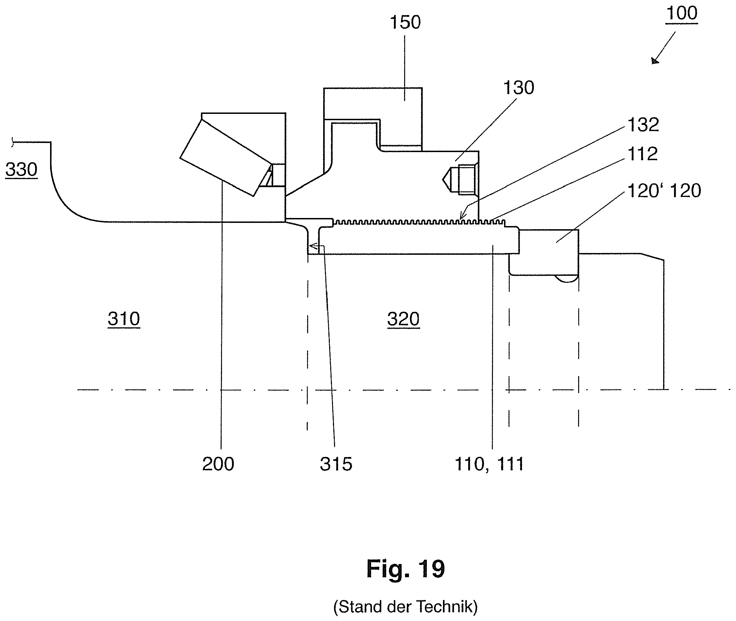

Lagerverschlussvorrichtungen sind im Stand der Technik grundsätzlich bekannt. Eine bekannte Lagerverschlussvorrichtung ist beispielsweise in Figur 19 gezeigt. Sie ist in Fachkreisen unter dem Namen "QC-Quick Change" bekannt. Diese bekannte Lagerverschlussvorrichtung 100 dient zur Befestigung mindestens eines Lagers 200 auf einem Walzenzapfen 310 einer Walze, wobei das Lager 200 ausgebildet ist zum Lagern der Walze in einem Walzgerüst. Die Lagerverschlussvorrichtung 100 weist einen auf einen Walzenabsatz 320 des Walzenzapfens 310 aufschiebbaren Gewindering 110 auf. Ein erster Abschnitt 111 des Gewinderings 110 weist ein Außengewinde 112 auf. An dem von dem Walzenballen 330 entfernt liegenden Ende des Walzenabsatzes 320 ist ein Anschlag in Form eines Klappringes 120' oder eines Bajonett-Verschlusses 120" angeordnet zum Begrenzen der axialen Bewegung des Gewinderings 110. Weiterhin umfasst die bekannte Lagerverschlussvorrichtung 100 eine Ringmutter 130 mit einem Innengewinde 132 zum Aufschrauben auf das Außengewinde 112 des Gewinderinges 110.

Das Aufziehen des Lagers 200 auf den Walzenzapfen erfolgt traditionell mit Hilfe eines Krans, mit welchem das Lager zusammen mit der Lagerverschlussvorrichtung 100 zunächst auf dem Walzenzapfen bzw. dem Zapfenabsatz vorpositioniert wird. Nach dieser Vorpositionierung wird der Klappring 120' in einer Nut in dem Walzenabsatz geschlossen oder der Bajonett-Verschluss 120" auf dem Walzenabsatz arretiert, d. h. der Anschlag wird eingerichtet. Nachfolgend wird die Ringmutter 130 mit Hilfe eines Kranseils festgedreht. Dabei verschiebt sich die Ringmutter 130 gemäß Figur 19 axial in Richtung Lager 200, wodurch das Lager 200 weiter nach links in Richtung Walzenballen 330 auf den Walzenzapfen 310 aufgeschoben wird. Aufgrund der Kopplung von der Ringmutter 130 mit dem Gewindering 110 über das gemeinsame Gewinde 112, 132 verschiebt sich beim Drehen der Ringmutter 130 gleichzeitig der Gewindering 110 in Figur 19 nach rechts und stützt sich gegen den Anschlag, beispielsweise den Klappring 120' ab, wobei sich der Klappring seinerseits wiederum in der Nut der Walze bzw. des Walzenabsatzes 320 abstützt.

Das Abziehen des Lagers 200 von dem Walzenzapfen erfolgt traditionell wie folgt: Zunächst wird die Ringmutter 130 mittels des Kranseils losgedreht; in Figur 19 bewegt sich die Mutter dabei nach rechts bis sie sich mit ihrem äußeren Bund bzw. Flansch an dem Zwischenring 150 abstützt. Während dieser Abstützung bewegt sich der Gewindering 110, wenn die Ringmutter 130 weiter gedreht wird aufgrund der Kopplung über das Gewinde 112, 132 nach links, bis der Gewindering 110 an dem Anschlag 315 an dem Walzenzapfen 310 anschlägt. Dadurch wird der Anschlag bzw. Klappring 120' frei von jeglicher Vorspannung und kann geöffnet bzw. entfernt werden. Mit dem Entfernen des Klapprings ist dann der Weg frei für ein axiales Abziehen der Lagerschlussvorrichtung 100 zusammen mit dem Lager 200 von dem Walzenzapfen mit Hilfe des Krans.

Nachteilig an diesem bekannten Stand der Technik ist die Notwendigkeit, dass die Ringmutter 130 mit Hilfe eines Kranseils entweder festgedreht oder losgedreht werden muss. Diese Vorgehensweise ist gefährlich für eine Bedienperson und ungenau im Hinblick auf eine gewünschte genaue Positionierung des Lagers auf dem Walzenzapfen.

Ergänzend wird bezüglich des Standes der Technik auch auf die europäische Patentanmeldung EP 2 143 521 A1 hingewiesen, welche eine Flanschverbindung mit Hilfe von Schraubbolzen offenbart. Peripher zu einem Hauptbolzen, welcher die beiden Flansche verbindet, ist eine Mehrzahl von kleineren Schrauben angeordnet, welche dazu dienen, eine Vorspannung einer vorbestimmten Größe aufzubauen. Die Schrauben bleiben auch während des Betriebs bzw. während des Bestehens der Flanschverbindung unter der Vorspannung. Dies ist nachteilig.

Die Merkmale des Oberbegriffs des Anspruchs 1 sind offenbart in der DE 12 54 108 B.

Der Erfindung liegt die Aufgabe zugrunde, eine bekannte Lagerverschlussvorrichtung sowie bekannte Verfahren zum Aufziehen des Lagers auf einen Walzenzapfen und zum Lösen des Lagers von dem Walzenzapfen mit Hilfe der Lagerverschlussvorrichtung sicherer zu machen, insbesondere weil das Kranseil entbehrlich wird, und verwendete Schrauben dauerhaft zu entlasten.

Diese Aufgabe wird vorrichtungstechnisch durch die in Anspruch 1 beanspruchte Lagerverschlussvorrichtung gelöst. Demnach ist die erfindungsgemäße Lagerverschlussvorrichtung dadurch gekennzeichnet, dass zwischen dem Lager und dem Gewindering ein Druckring vorgesehen ist, welcher ebenfalls in axialer Richtung verschiebbar gelagert ist, und welcher in radialer Richtung sowohl mit dem Gewindering wie auch mit der Ringmutter zumindest teilweise überlappt; dass in dem Gewindering - über dessen Umfang verteilt - mehrere Schrauben in axialen Gewindebohrungen drehbar gelagert sind zum Drücken in axialer Richtung gegen den Druckring; und dass die Ringmutter in axialer Richtung gegen den Druckring schraubbar und anstellbar ist.

Die notwendige Kraft zum Aufziehen des Lagers auf den Walzenzapfen erfolgt erfindungsgemäß zunächst mit Hilfe der Schrauben, welche mit einem Momentenschlüssel oder sonstigen geeigneten Werkzeugen angezogen werden. Dadurch wird die gefährliche Verwendung eines Kranseils zum Aufbringen der notwendigen Aufziehkraft für das Lager entbehrlich. Damit die Schrauben jedoch während des Betriebs des Lagers und der Walze nicht permanent unter Druck stehen müssen, wird, wie weiter unten bei der Beschreibung der erfindungsgemäßen Verfahren deutlich werden wird, die Ringmutter gegen den Druckring geschraubt, bis sie gegen diesen anschlägt. Der Druckring und damit auch das Lager werden durch die Ringmutter in ihrer axialen Position fixiert. Die Schrauben werden dann vor Inbetriebnahme zurückgedreht und dadurch von der axialen Druckkraft entlastet.

Ähnliches gilt auch für den Vorgang des Lösens bzw. Abziehen des Lagers von dem Walzenzapfen. Auch hier dienen die Schrauben in dem Gewindering nur kurzzeitig zum Entkoppeln von Druckring und Ringmutter; nur dafür sind die Schrauben in dem Gewindering kurzzeitig axial stark belastet; danach werden sie wieder zurückgeschraubt und dadurch axial entlastet.

Gemäß einem ersten Ausführungsbeispiel umfasst die Lagerverschlussvorrichtung weiterhin einen ringförmigen Abschlussdeckel zum Übergreifen von zumindest radial äußeren - nicht mit der Walze mitdrehenden - Teilen des Lagers. Anders ausgedrückt ist der Abschlussdeckel so ausgebildet, dass er mit dem Lager derart in Eingriff steht, dass bei Aufbringen einer axialen Kraft an dem Abschlussdeckel das Lager axial von dem Walzenzapfen mit abgezogen wird. Zum Aufbringen der Kraft dienen erfindungsgemäß Schrauben, welche direkt oder indirekt mit dem Abschlussdeckel und der Ringmutter in Verbindung stehen zum Aufbauen einer axialen Spannung zwischen dem Abschlussdeckel und der Ringmutter für das axiale Abziehen des Lagers.

Verschiedene Ausgestaltungen des Abschlussdeckels und der Ringmutter sind Gegenstand der abhängigen Ansprüche.

Weiterhin sind verschiedene Ausführungsbeispiele für den walzenballenfernen Anschlag Gegenstand der abhängigen Ansprüche. So kann dieser walzenballenferne Anschlag beispielsweise als Klappring oder als Bajonett-Verschluss ausgebildet sein.

Der Druckring kann zumindest teilweise beispielsweise auf einer Verlängerung (2. Abschnitt) des Gewinderings in Richtung des Lagers, auf dem Walzenzapfen oder auf einem Füllring zwischen Lager und Gewindering axial verschiebbar gelagert sein.

Für das Abziehen des Lagers von dem Walzenzapfen ist es erforderlich, dass der Gewindering in seiner axialen Bewegung auf den Walzenballen hin begrenzt wird und sich an einem walzenballennahen Anschlag abstützen kann. Dieser kann beispielsweise dadurch ausgebildet sein, dass ein zweiter ringförmiger Abschnitt des Walzenzapfens, d. h. der Walzenabsatz, mit einem kleineren Durchmesser ausgebildet ist als der erste ringförmige Abschnitt des Walzenzapfens. Alternativ kann der walzenballennahe Anschlag für den Gewindering auch durch eine Art Passfeder in dem Walzenzapfen auf Höhe des Gewinderings ausgebildet sein.

Das Aufziehen des Lagers auf den Walzenzapfen erfolgt vorzugsweise mit einer vorbestimmten axialen Kraft. Um diese Aufziehkraft kontrollieren zu können, ist es erfindungsgemäß optional vorgesehen, dass der Druckring eine Druckmesszelle aufweisen bzw. aufweist zum Erfassen der tatsächlich aufgebrachten Aufziehkraft.

Die oben genannte Aufgabe der Erfindung wird weiterhin durch ein Verfahren zum Aufziehen des Lagers auf den Walzenzapfen sowie durch ein Verfahren zum Lösen bzw. Abziehen des Lagers von dem Walzenzapfen, jeweils mit Hilfe der erfindungsgemäßen Lagerverschlussvorrichtung gelöst. Die Vorteile dieser Verfahren entsprechen den oben mit Bezug auf die beanspruchte Lagerverschlussvorrichtung genannten Vorteilen.

Der Beschreibung sind insgesamt 19 Figuren beigefügt, wobei
- Figur 1: die erfindungsgemäße Lagerverschlussvorrichtung mit jeweils einem ersten Ausführungsbeispiel für den erfindungsgemäßen walzenballenfernen Anschlag, für eine Abschlussdeckel-Ringmutter-Ausgestaltung und für eine Walzenzapfen-Gewindering-Ausgestaltung;
- Figur 2: ein zweites Ausführungsbeispiel für den walzenballenfernen Anschlag;
- Figuren 3-7: das Aufziehen eines Lagers auf einen Walzenzapfen mit Hilfe der erfindungsgemäßen Lagerverschlussvorrichtung;
- Figuren 8-13: das Abziehen bzw. Lösen des Lagers von dem Walzenzapfen;
- Figur 14: ein zweites Ausführungsbeispiel für eine erfindungsgemäße Abschlussdeckel-Ringmutter-Ausgestaltung;
- Figur 15: ein drittes Ausführungsbeispiel für eine erfindungsgemäße Abschlussdeckel-Ringmutter-Ausgestaltung;
- Figur 16: ein zweites Ausführungsbeispiel für die Walzenzapfen-Gewindering-Ausgestaltung;
- Figur 17: ein drittes Ausführungsbeispiel für die Walzenzapfen-Gewindering-Ausgestaltung;
- Figur 18: ein viertes Ausführungsbeispiel für die Walzenzapfen-Gewindering-Ausgestaltung; und
- Figur 19: eine bekannte Lagerverschlussvorrichtung aus dem Stand der Technik
veranschaulicht/veranschaulichen.

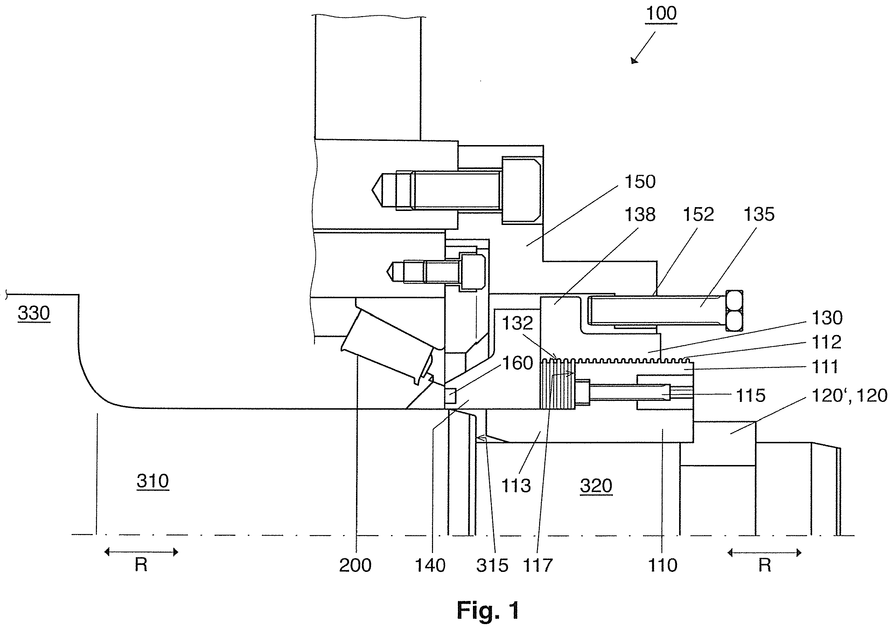

Die Erfindung wird nachfolgend unter Bezugnahme auf die genannten Figuren 1 bis 18 in Form von Ausführungsbeispielen detailliert beschrieben. In allen Figuren sind gleiche technische Elemente mit gleichen Bezugszeichen bezeichnet.

Figur 1 zeigt die erfindungsgemäße Lagerverschlussvorrichtung 100 in einer ersten Ausführungsform. Sie dient zum Aufziehen mindestens eines Lagers 200 auf einen Walzenzapfen 310, zum Halten des Lagers 200 auf dem Walzenzapfen oder zum Lösen des Lagers 200 von dem Walzenzapfen 310 einer Walze.

Die Lagerverschlussvorrichtung 100 weist einen Gewindering 110 auf, welcher auf einen Walzenabsatz 320 des Walzenzapfens 310 axial aufschiebbar ist. Der Gewindering 110 weist einen ersten sich axial erstreckenden Abschnitt 111 auf, welcher an seiner Außenseite ein Außengewinde 112 trägt. Neben dem ersten ringförmigen Abschnitt 111 weist der Gewindering 110 einen zweiten ringförmigen Abschnitt 113 auf. Typischerweise ist der zweite ringförmige Abschnitt mit einem kleineren Außendurchmesser ausgebildet als der erste ringförmige Abschnitt 111, wodurch im Übergangsbereich zwischen den beiden Abschnitten 111, 113 ein Anschlag 117 ausgebildet wird. Der Gewindering 110 ist derart in der Lagerverschlussvorrichtung eingebaut, dass der erste Abschnitt 111 weiter entfernt von dem Walzenballen 330 der Walze angeordnet ist als der zweite Abschnitt 113.

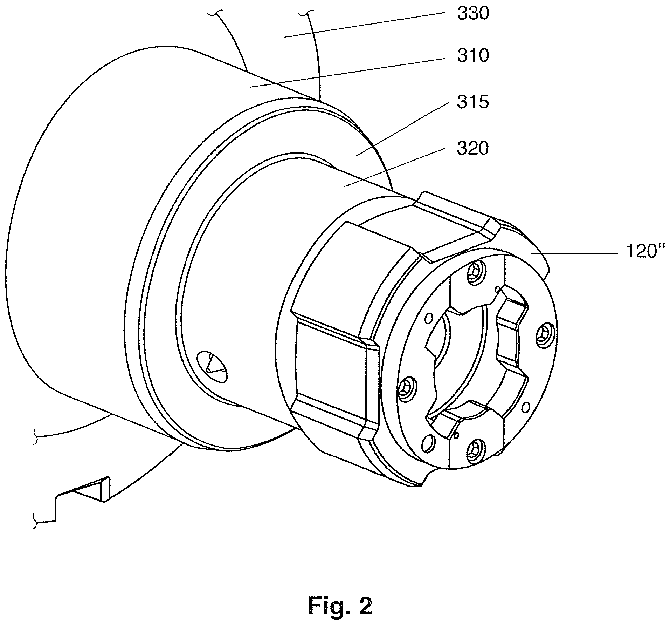

Die erfindungsgemäße Lagerverschlussvorrichtung 100 weist weiterhin einen an dem walzenballenfernen Ende des Walzenabsatzes 320 befestigbaren Anschlag 120 auf zum Begrenzen der axialen Bewegung des Gewinderinges 110, welcher auf dem Walzenabsatz 320 axial verschiebbar gelagert ist. Der Anschlag 120 kann entweder in Form eines Klappringes 120' oder in Form eines Bajonett-Verschlusses 120", wie in Figur 2 gezeigt, ausgebildet sein.

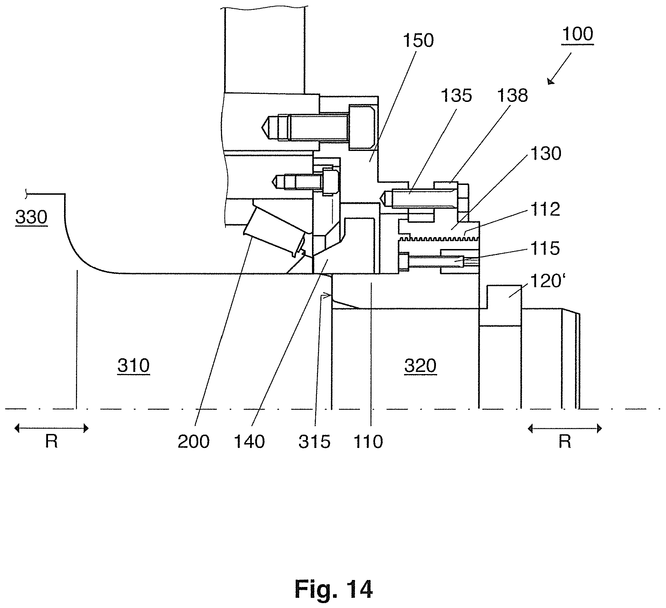

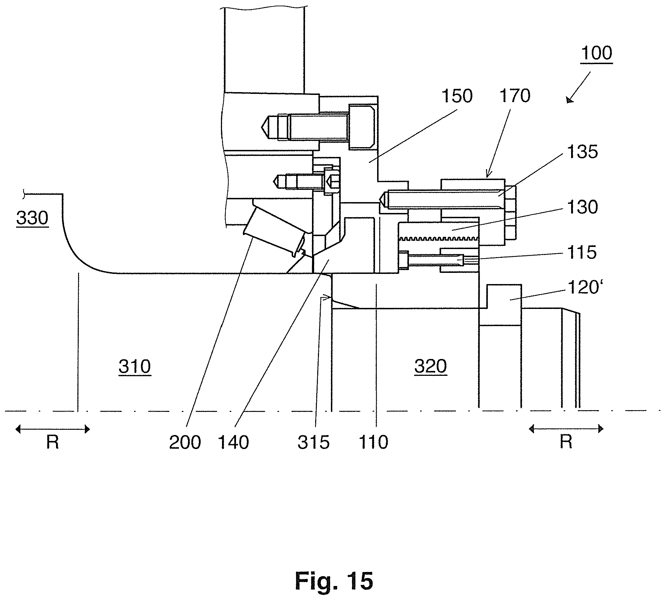

Die erfindungsgemäße Lagerverschlussvorrichtung 100 weist weiterhin eine Ringmutter 130 auf mit einem Innengewinde 132 zum Aufschrauben auf das Außengewinde 112 des Gewinderings 110. Bei dem in Figur 1 gezeigten Ausführungsbeispiel weist die Ringmutter 130 einen sich radial nach außen erstreckenden Flansch 138 auf. Dieser Flansch 138 kann ohne oder mit axialen Bohrungen ausgebildet sein; siehe auch Figur 14. Alternativ kann die Ringmutter auch gänzlich ohne äußeren Flansch ausgebildet sein; siehe dazu Figur 15.

Wie in Figur 1 zu erkennen ist, weist die erfindungsgemäße Lagerverschlussvorrichtung 100 einen Druckring 140 auf, welcher auf dem zweiten ringförmigen Abschnitt 113 des Gewinderings 110 in axialer Richtung R verschiebbar gelagert ist. In dem ersten Abschnitt 111 des Gewinderings 110 sind - über dessen Umfang verteilt - mehrere Schrauben 115 in axialen Gewindebohrungen drehbar gelagert zum Drücken gegen den Druckring 140 in axialer Richtung R.

Weiterhin weist die Lagerverschlussvorrichtung 100 einen ringförmigen Zwischenring 150 auf, welcher so ausgebildet ist, dass er zumindest die radial äußeren - nicht mit der Walze mitdrehenden - Teile des Lagers 200 teilweise übergreift bzw. mit diesen in Eingriff steht. Dies bedeutet, dass das Lager von dem Zwischenring bzw. von dem Druckring auf den Walzenzapfen aufgeschoben oder von dem Walzenzapfen gelöst bzw. abgezogen wird. Zwischenring 150 und Lager 200 bilden somit eine Einheit.

Neben den ersten Schrauben 115 in dem Gewindering 110 sind zweite Schrauben 135 vorgesehen, welche direkt oder indirekt mit dem Zwischenring 150 und der Ringmutter 130 in Verbindung stehen zum Aufbau einer axialen Kraft zwischen dem Zwischenring 150 und der Ringmutter 130 für das axiale Abziehen des Lagers 200.

Gemäß der vorliegenden Erfindung werden insgesamt 3 verschiedene Varianten für die Ausgestaltung des Zwischenrings 150 und der Ringmutter 130 für ein wirkungsvolles Zusammenwirken unterschieden.

Eine erste Variante ist in Figur 1 gezeigt. Wie gesagt, weist die Ringmutter 130 für diese erste Variante den radial nach außen ragenden Flansch 138 auf. Der ringförmige Zwischenring 150 weist in seinem radialen Innenbereich einen sich axial und radial erstreckenden inneren Flansch 152 auf. Dieser Flansch ist ausgebildet, den äußeren Flansch 138 der Ringmutter 130 derart zu übergreifen, dass sich die ballenferne Stirnseite des Flansches 138 der Ringmutter 130 und die ballennahe Stirnseite des Flansches 152 des Zwischenringes gegenüberstehen. Die zweiten Schrauben 135 sind in axiale Bohrungen in dem Flansch 152 des Zwischenrings einschraubbar, wie in Figur 1 gezeigt, zum Aufbau einer axialen Kraft zwischen dem Zwischenring 150 und der Ringmutter 130, wenn die zweiten Schrauben 135 gegen den Flansch 138 geschraubt werden und sich dort abstützen.

Eine zweite Variante für die Ausgestaltung von Zwischenring 150 und Ringmutter 130 ist in Figur 14 gezeigt. Im Unterschied zu der ersten Variante nach Figur 1 sind in dem Flansch 138 der Ringmutter 130 bei der zweiten Variante über den Umfang des Flansches verteilt eine Mehrzahl von axial ausgerichteten Bohrungen ausgebildet. Der ringförmige Zwischenring 150 übergreift den Flansch 138 der Ringmutter jetzt nicht, sondern steht mit seinem radialen Innenbereich der ballennahen Stirnseite des äußeren Flansches 138 gegenüber. In diesem radialen Innenbereich weist der Zwischenring 150 über seinen Umfang verteilt eine Mehrzahl von axial ausgerichteten Bohrungen mit Innengewinde auf, wobei die Bohrungen in dem Zwischenring 150 mit den Bohrungen in dem Flansch 138 der Ringmutter 130 fluchten. Die zweiten Schrauben 135 sind durch die Bohrungen in dem Flansch 138 der Ringmutter hindurchführbar und in die Gewindebohrungen in dem Zwischenring 150 einschraubbar zum Aufbauen der Zugspannung zwischen dem Zwischenring und der Ringmutter. Zum Lösen des Lagers 200 von dem Walzenzapfen werden die zweiten Schrauben 135 angezogen, wodurch sich die Kraft zwischen dem Zwischenring und der Ringmutter aufbaut, weil sich die Schrauben mit ihren Schraubenköpfen an dem Flansch 138 abstützen. Aufgrund der formschlüssigen Verbindung zwischen dem Zwischenring 150 und dem Lager 200 wird das Lager dann zusammen mit dem Zwischenring bzw. mit Hilfe des Zwischenrings von dem Walzenzapfen gelöst bzw. abgezogen; dies gilt für alle drei Varianten.

Die dritte Variante ist in Figur 15 dargestellt. Bei dieser dritten Variante ist ein Zusatzring 170 vorgesehen zum axialen Aufsetzen auf die ballenferne Stirnseite der Ringmutter 130. Der Zusatzring 170 weist an seiner Peripherie über seinen Umfang verteilt eine Mehrzahl von axial ausgerichteten Bohrungen auf, welche radial außerhalb der Ringmutter ausgebildet sind. Der ringförmige Zwischenring 150 steht mit seinem radialen Innenbereich der ballennahen Stirnseite der Peripherie des Zusatzringes 170 gegenüber. In diesem seinem radialen Innenbereich weist der Zwischenring über seinen Umfang verteilt eine Mehrzahl von axial ausgerichteten Bohrungen mit Innengewinde auf, wobei diese Bohrungen mit den Bohrungen in dem Zusatzring 170 fluchten. Die zweiten Schrauben 135 sind bei der dritten Variante durch die Bohrungen in dem Zusatzring 170 hindurchführbar und in die Bohrungen in dem Zwischenring 150 einschraubbar zum Aufbauen der Kraft zwischen dem Zwischenring der Ringmutter und dem Zusatzring 170 zum Lösen des Lagers 200 von dem Walzenzapfen 310, wobei sich die Schrauben 135 mit ihren Schraubenköpfen an dem Zusatzring 170 abstützen.

Wieder bezugnehmend auf Figur 1 ist zu erkennen, dass hier beispielhaft der Druckring 140 eine Druckmesszelle 160 aufweist zum Erfassen einer tatsächlich von den ersten Schrauben 115 aufgebrachten Aufziehkraft beim Aufziehen des Lagers 200 auf den Walzenzapfen.

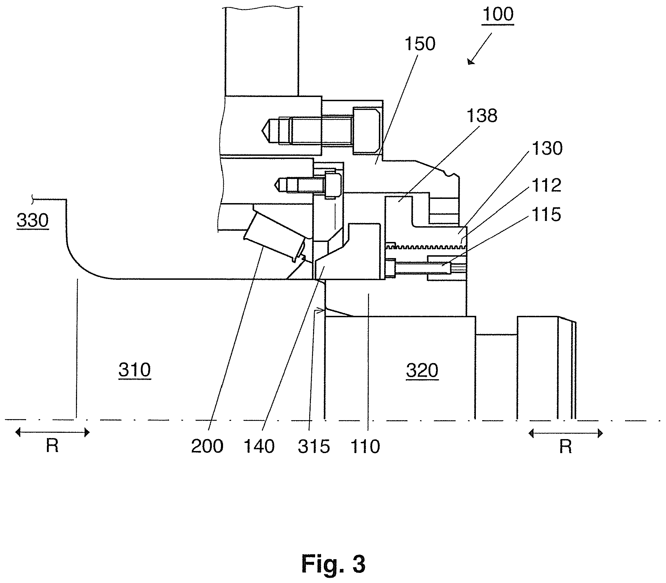

Das erfindungsgemäße Verfahren zum Aufziehen des Lagers 200 auf den Walzenzapfen 310 einer Walze mit Hilfe der erfindungsgemäßen Lagerverschlussvorrichtung 100 weist folgende Schritte auf:
Zunächst wird das Lager in formschlüssiger Verbindung mit der Lagerverschlussvorrichtung 100 auf dem Walzenzapfen 310 vorpositioniert. Dabei wird das Lager 200 ballennäher auf dem Walzenzapfen positioniert als die Lagerverschlussvorrichtung 100; letztere wird, wie in Figur 3 gezeigt, vielmehr axial weiter außen auf dem Walzenabsatz 320 vorpositioniert.

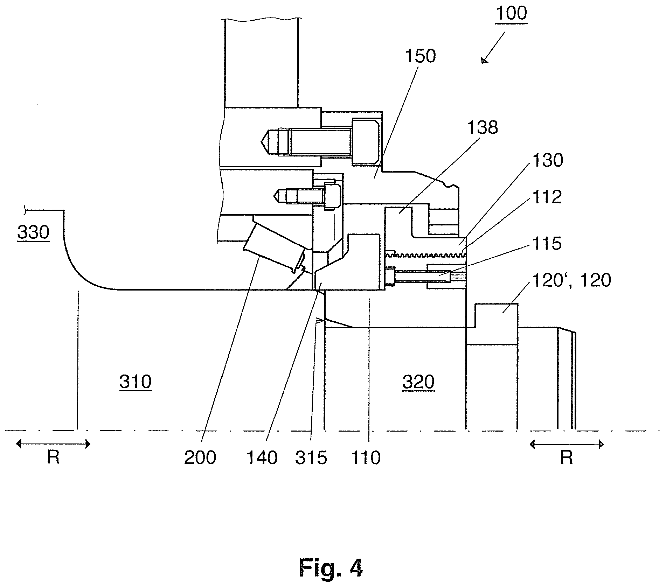

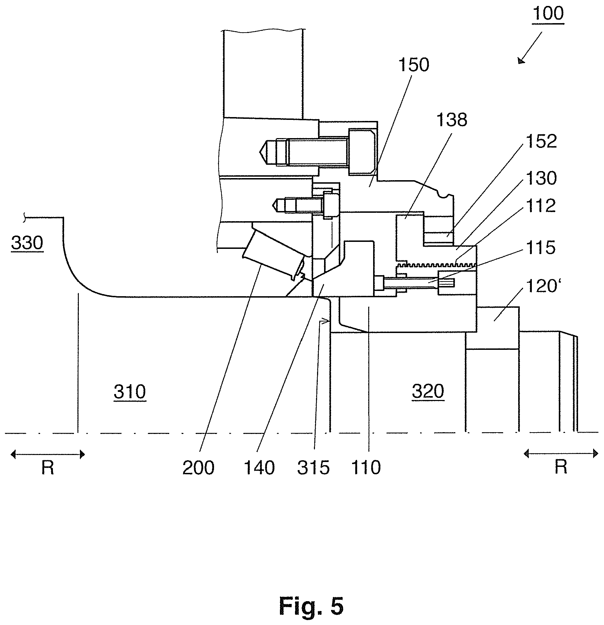

Die Vorpositionierung des Lagers und der Lagerverschlussvorrichtung erfolgen typischerweise mit einem Kran oder mit einer Aufziehmaschine. Nach der Vorpositionierung wird der Anschlag 120 gemäß Figur 4 auf dem walzenballenfernen Ende des Walzenabsatzes 320 axial fixiert. Der Anschlag 120, beispielsweise in Form des Klapprings 120' oder des Bajonett-Verschlusses 120" dient als rechtsseitige Wegbegrenzung für die axiale Bewegung des Gewinderinges 110. Das eigentliche Positionieren des Lagers 200 auf den Walzenzapfen 310 mit einer vorbestimmten Aufziehkraft erfolgt durch axiales Verschieben des Druckringes 140, in Figuren 3 und 4 beispielhaft nach links gegen das Lager 200. Diese axiale Verschiebung von Druckring 140 und Lager 200 erfolgt durch Einschrauben der ersten Schrauben 115 in die axialen Gewindebohrungen in dem ersten ringförmigen Abschnitt 111 des Gewinderinges 110 gegen den Druckring 140. Dabei stützt sich der Gewindering 110 an dem axial fixierten Anschlag 120, 120' ab. Das Aufbringen der besagten vorbestimmten Aufziehkraft erfolgt durch Anziehen der ersten Schrauben 115 mit einem jeweils vorbestimmten Drehmoment mit Hilfe eines Drehmomentenschlüssels oder sonstigen geeigneten Werkzeugen; siehe Figur 5.

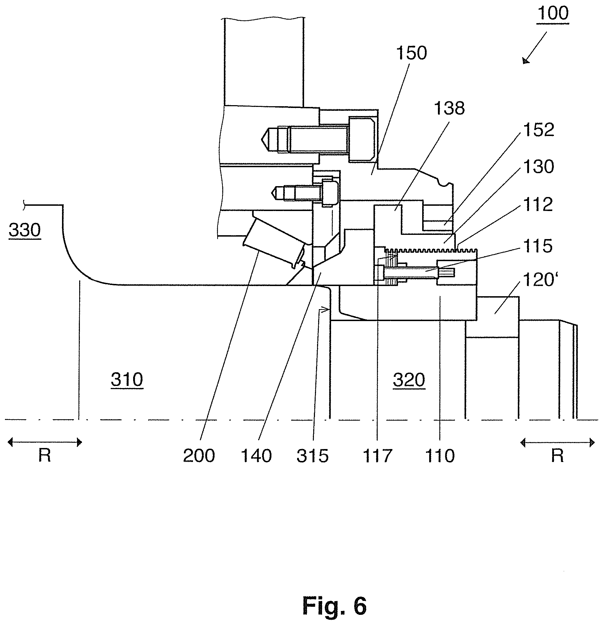

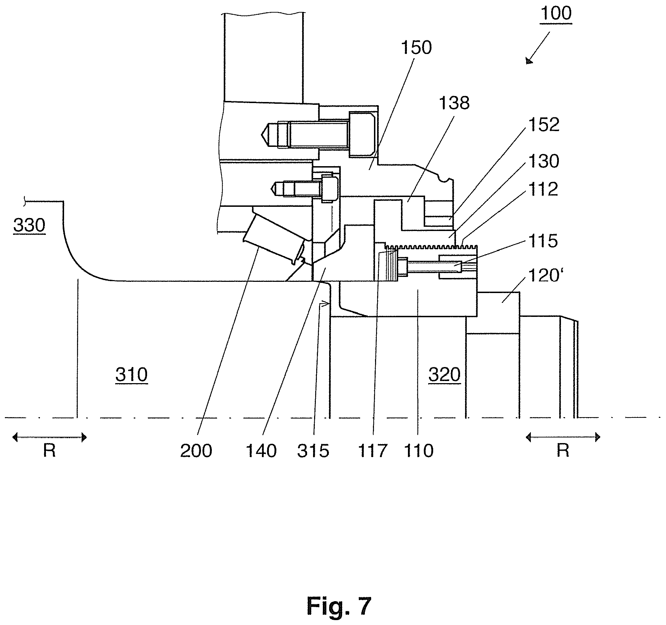

Nachdem die vorbestimmte Aufziehkraft in der beschriebenen Weise aufgebracht wurde, wird die Ringmutter 130 gegen den Druckring 140 gedreht und in dieser Position formschlüssig arretiert; siehe Figur 6. Die Ringmutter 130 tritt damit an die Stelle der Schrauben und übernimmt für diese die Aufrechterhaltung der notwendigen Aufziehkraft auch während des späteren Betriebs der Walze und des Lagers. Die ersten Schrauben 115 können jetzt zurückgedreht und auf diese Weise entlastet werden, wie in Figur 7 gezeigt. Das Lager 200 ist damit aufgezogen.

Das erfindungsgemäße Verfahren zum Lösen bzw. Abziehen des Lages von dem Walzenzapfen weist folgende Schritte auf:
Die Ausgangskonstellation für den Abziehvorgang entspricht der Endkonfiguration bzw. dem Zustand der erfindungsgemäßen Lagerverschlussvorrichtung am Ende des Aufziehvorganges mit dem einzigen Unterschied, dass nunmehr auch die zweiten Schrauben 135 in die Bohrungen in dem Flansch 152 des Zwischenrings 150 eingeschraubt sind. Diese zweiten Schrauben 135 sind lediglich für den Abziehvorgang, nicht jedoch für den Aufziehvorgang relevant.

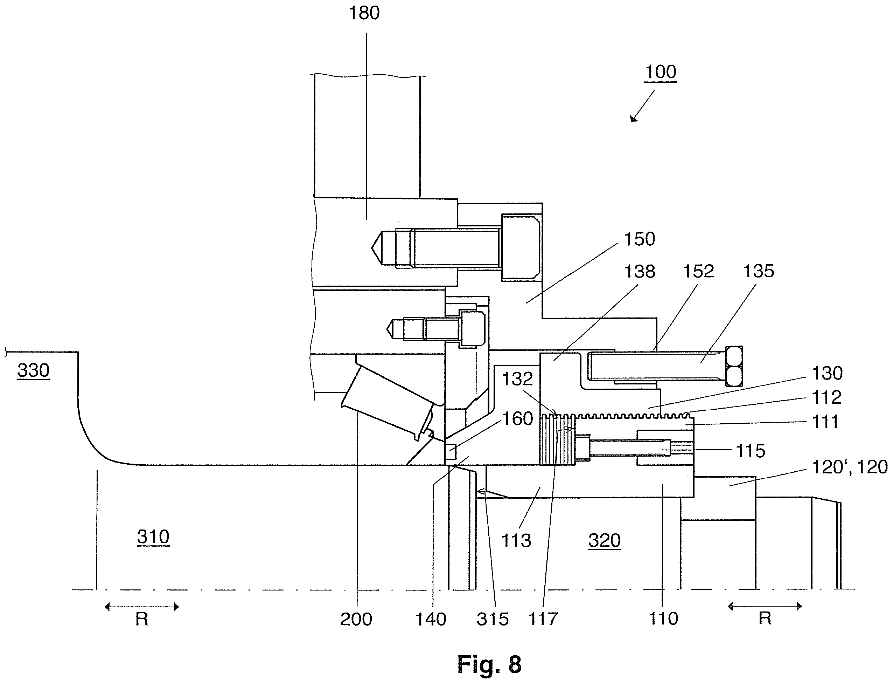

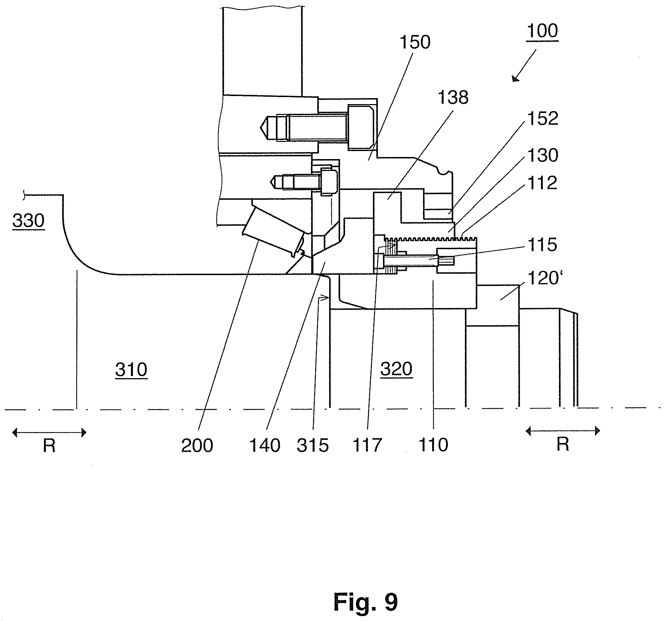

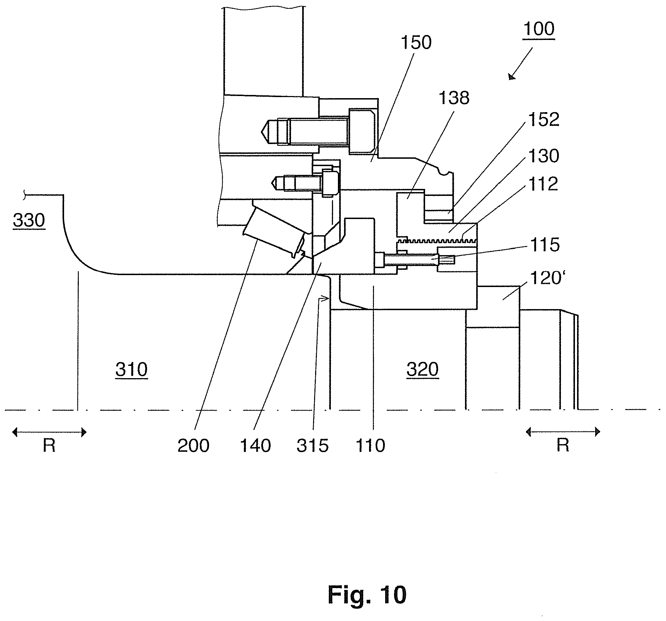

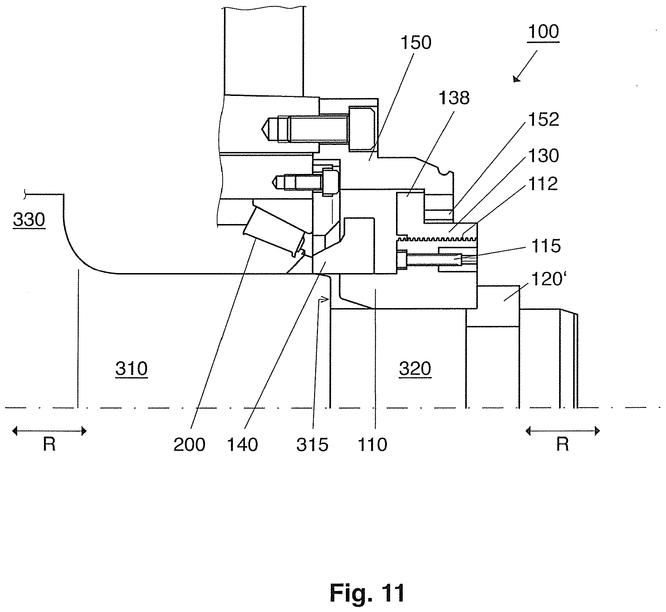

Die Ausgangsposition für den Abziehvorgang ist in Figur 8 dargestellt. Zur Vorbereitung des Abziehvorganges muss zunächst die Verspannung zwischen dem Druckring 140 und der Ringmutter 130 gelöst werden. Dazu werden die ersten Schrauben 115 gleichmäßig auf einen vorbestimmten Drehmomentenbetrag angezogen, so dass sie mit einer vorbestimmten (Aufzieh-) Kraft in axialer Richtung gegen den Druckring 140 drücken. Dabei stützen sich die ersten Schrauben 115 über den Gewindering 110 und den Anschlag 120 an dem Walzenzapfen ab. Der Druckring 140 gibt dann die von den ersten Schrauben 115 aufgebrachte Aufziehkraft an das Lager 200 weiter, wodurch das Lager ein Stück weit weiter auf den Walzenzapfen 310 aufgezogen wird. Die Ringmutter 130 wird dadurch frei, d. h. die zuvor bestehende axiale Verspannung zu dem Druckring 140 wird auf diese Weise abgebaut; siehe Figur 9. Gemäß Figur 10 wird daraufhin die Ringmutter 130 entriegelt und aus ihrer Anschlagsposition in axialer Richtung weg von dem Walzenballen 330 zurückgedreht. Nach dem Zurückdrehen der Ringmutter 130 können auch die Schrauben 115 von dem Lager weg zurückgedreht werden; siehe Figur 11.

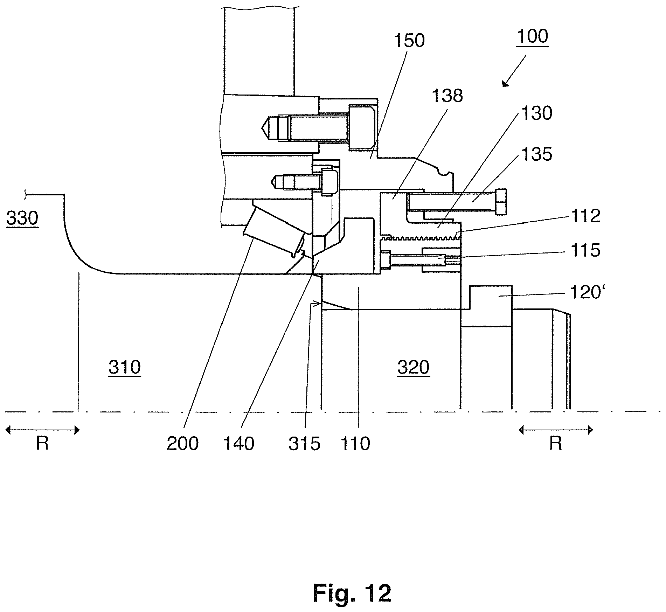

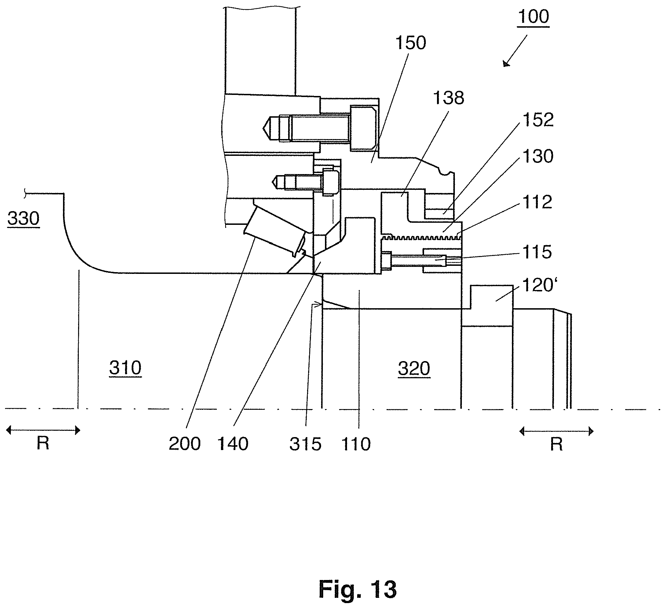

In Figur 12 ist gezeigt, dass nun die zweiten Schrauben 135 gegen den Flansch 138 der Ringmutter 130 angezogen werden zum Aufbau einer Kraft zwischen dem Abschlussdeckel und der Ringmutter zum Lösen bzw. Abziehen des Lagers von dem Walzenzapfen. Die Kraft baut sich auf, weil bei der in Figur 12 gezeigten ersten Variante zur Ausgestaltung der Abschlussdeckel-Ringmutter-Konstellation der Gewindering 110, welcher über sein Außengewinde 112 mit der Ringmutter 130 in Eingriff steht, ein Stück weit in axialer Richtung auf den Walzenballen 330 bzw. auf das Lager 200 hin verschoben wird und sich an dem walzenballennahen Anschlag 315 in dem Walzenzapfen 310 abstützen kann. Aufgrund der formschlüssigen Verbindung zwischen Zwischenring 150 und dem Lager 200 löst sich dieses aufgrund der aufgebauten Kraft von dem Walzenzapfen. Die zweiten Schrauben 135 können nun entfernt werden, wie in Figur 13 gezeigt. Nachfolgend wird der Anschlag 120 dann entfernt und das Lager 200 kann dann zusammen mit der Lagerverschlussvorrichtung 100 beispielsweise mit Hilfe eines Krans von dem Walzenzapfen 310 abgezogen werden.

Die Figuren 14 und 15 wurden oben im Text bereits erwähnt.

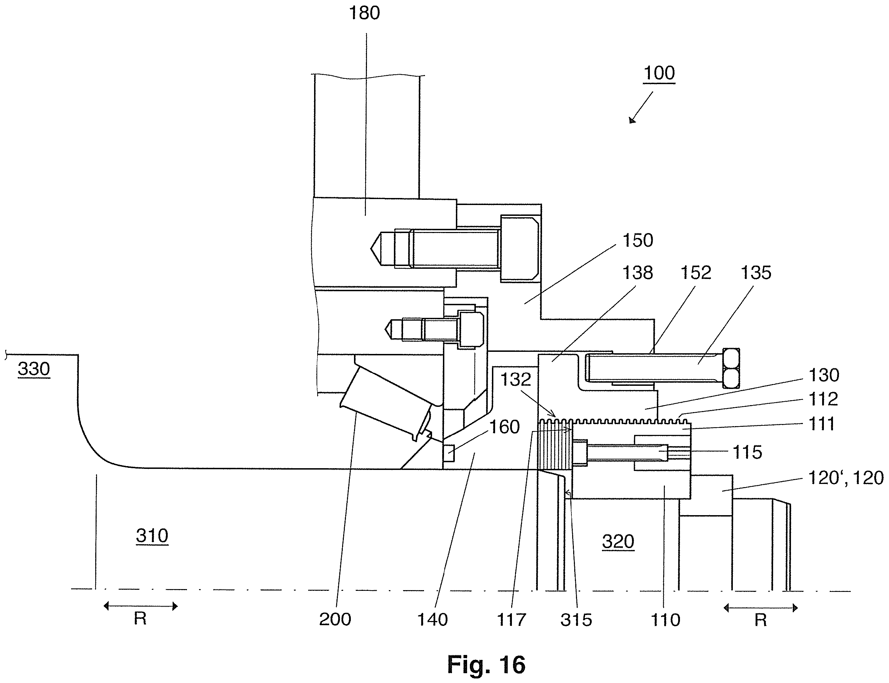

Figur 16 zeigt ein zweites Ausführungsbeispiel zur Gestaltung des Zusammenwirkens von Walzenzapfen und Gewindering. Im Unterschied zu dem in Figur 1 gezeigten ersten Ausführungsbeispiel ist bei dem jetzt in Figur 16 gezeigten zweiten Ausführungsbeispiel der Walzenzapfen 310 ein Stück weit nach rechts hin verlängert ausgebildet, so dass der Druckring 140 nun vollständig auf dem Walzenzapfen 310 axial verschiebbar gelagert ist. Weiterhin ist der zweite axiale Abschnitt 113 des Gewinderings 110 komplett entfallen, weil er als Lagerfläche für den Druckring 140 bei dieser zweiten Ausführungsform nicht mehr benötigt wird; der Gewindering 110 baut in dieser zweiten Ausführungsform ohne den zweiten Abschnitt 113 schmäler als in Figur 1 mit dem besagten zweiten Abschnitt; vielmehr erstreckt sich der Gewindering 110 nunmehr nur noch über die Breite des vormals ersten Abschnittes 111.

Nach wie vor ist der Gewindering 110 jedoch axial verschiebbar zwischen dem walzenballenfernen Anschlag 120 bzw. 120' und dem walzenballennahen Anschlag 315. Sofern die Ringmutter 130 nicht gegen den Druckring 140 angestellt ist, wie in Figur 16 gezeigt, ist der Druckring zwischen dem Lager 200 und der walzenballennahen Stirnfläche 117 des Gewinderings 110 axial verschiebbar gelagert.

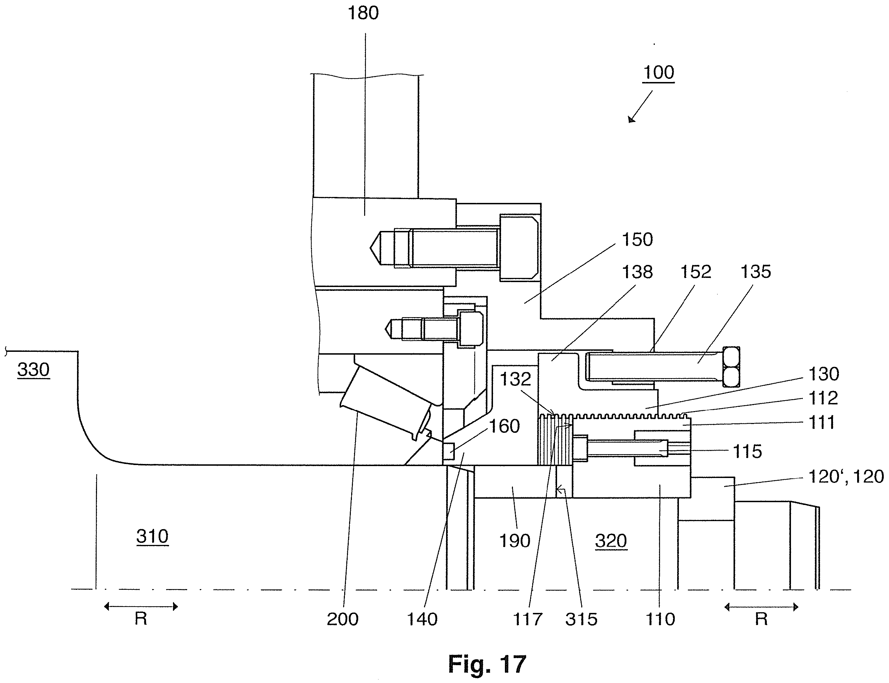

Figur 17 zeigt eine dritte Variante zur Ausgestaltung des Walzenzapfens in Verbindung mit dem Gewindering. Bei dieser dritten Ausgestaltung entfällt die Verlängerung des Walzenzapfens 310 nach rechts gemäß Figur 16; vielmehr ist dieser ähnlich lang bzw. kurz ausgebildet wie bei dem ersten Ausführungsbeispiel gemäß Figur 1. Trotzdem entfällt auch hier der besagte zweite Abschnitt 113 des Gewinderings 110; d. h. der Gewindering 110 ist in seiner Breite reduziert auf den ursprünglich ersten axialen Abschnitt 111. Als Ersatz für den zweiten axialen Abschnitt 113 des Gewinderings ist bei dem hier gezeigten dritten Ausführungsbeispiel nunmehr ein Füllring 190 zwischen dem ballennahen Anschlag 315 für den Gewindering und dem Gewindering 110 selber, genauer gesagt dessen walzenballenseitiger Stirnseite 117 angeordnet oder axial verschiebbar gelagert. Der Füllring 190 dient bei dem in Figur 17 gezeigten Ausführungsbeispiel als Träger- bzw. Stützring für den Druckring 140. Er ist deshalb bezüglich seiner radialen Höhe so ausgebildet, dass der Druckring 140 axial frei verschiebbar ist; insbesondere entspricht er in seiner radialen Höhe beispielsweise der Differenz zwischen dem Außendurchmesser des Walzenzapfens 310 und dem Außendurchmesser des Walzenabsatzes 320. Die walzenballenferne Stirnseite des Füllrings 190 dient nun als direkter walzenballennaher Anschlag für den Gewindering 110, wobei sich im Falle eines Anschlags der Füllring 190 seinerseits wiederum an dem Anschlag 315 abstützt; insofern bleibt auch bei Verwendung des Füllrings 190 der Anschlag 315 als indirekter Anschlag für den Gewindering 110 bestehen.

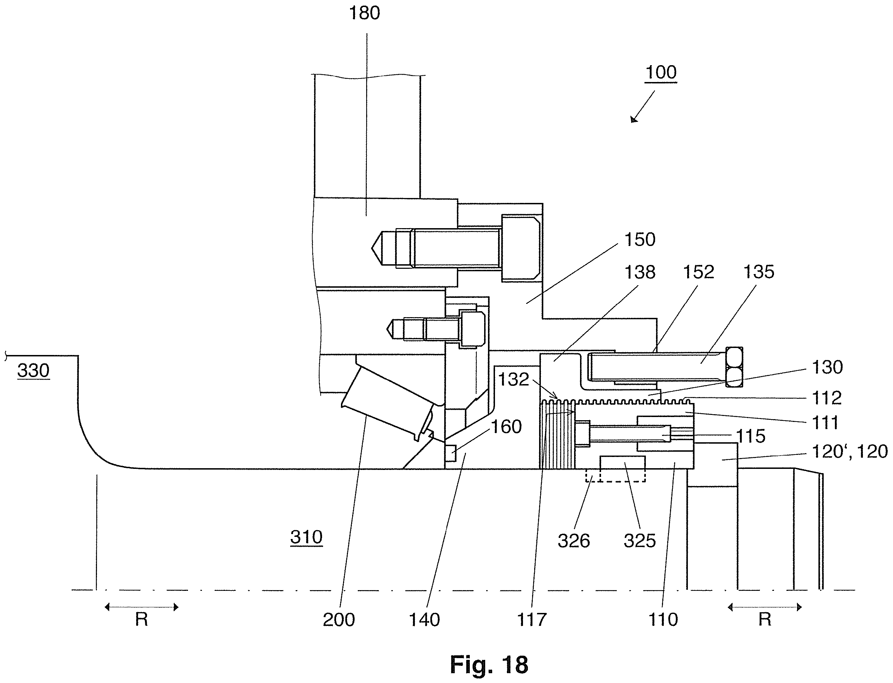

Figur 18 zeigt ein viertes Ausführungsbeispiel zur Gestaltung des Walzenzapfens 310 mit dem Gewindering 110. Der Walzenzapfen 310 ist nun durchgängig mit einem einheitlichen Außendurchmesser ausgebildet; eine Reduzierung des Außendurchmessers in Form des Walzenabsatzes 320 entfällt nunmehr gänzlich. Auch ist bei diesem vierten Ausführungsbeispiel der Gewindering 110 in seiner Breite auf seinen ersten axialen Abschnitt 111 ebenfalls beschränkt; die axiale Verlängerung 113 zum Tragen des Druckrings 140 entfällt gänzlich, wie auch bereits bei den zuvor beschriebenen Ausführungsbeispielen 2 und 3. Weil der Walzenzapfen nunmehr einen im Wesentlichen durchgängigen Außendurchmesser aufweist, ist bei dem jetzt behandelten vierten Ausführungsbeispiel der Druckring 140 wiederum über seiner gesamten Breite auf den Walzenzapfen aufgeschoben. Gleiches gilt für den Gewindering 110. Beide, sowohl der Druckring 140 wie auch der Gewindering 110 sind nun direkt auf dem Walzenzapfen 310 axial verschiebbar gelagert. Weil der Druckring 140 nunmehr auf dem Walzenzapfen verschiebbar gelagert ist, entfällt die Notwendigkeit für das Vorsehen des Füllringes 190 als radiale Stütze für den Druckring 140. Als rechtsseitige Begrenzung für die Bewegung des Gewinderings 110 dient nach wie vor der ballenferne Anschlag 120. Als walzenballennaher Anschlag dient nun eine in den Gewindering 110 eingesetzte Passfeder 325, welche in eine lokale axiale Nut 326 in der Oberfläche des Walzenzapfens 310 eingreift und gegebenenfalls gegen die ballennahe Begrenzung der Nut 326 anschlägt.

Bei allen vier beschriebenen Ausführungsbeispielen gemäß den Figuren 1, 16, 17 und 18 zur Gestaltung des Zusammenwirkens von Druckkörper 140, Walzenzapfen 310 und Gewindering 110 sind die beiden erfindungsgemäßen Verfahren zum Aufziehen des Lagers auf den Walzenzapfen sowie zum Abziehen des Lagers von dem Walzenzapfen, jeweils unter Zuhilfenahme der erfindungsgemäßen Lagerverschlussvorrichtung gleichermaßen bzw. analog durchführbar. Insbesondere bei einem Wegfall von einzelnen in den Figuren 1 bis 15 erwähnten Komponenten sind die weggefallenen Komponenten durch die unter Bezugnahme auf die Figuren 16 bis 18 geschriebenen Ersatzkomponenten zu ersetzen; das gilt insbesondere für die veränderten Gleitflächen für den Druckring 140 und für die veränderten Anschläge 117, 315.

### Bezugszeichenliste

- 100: Lagerverschlussvorrichtung
- 110: Gewindering
- 111: erster ringförmiger Abschnitt des Gewinderings
- 112: Außengewinde
- 113: zweiter ringförmiger Abschnitt des Gewinderings
- 115: erste Schrauben
- 117: Anschlag für den Druckring
- 120: Anschlag
- 120': Klappring
- 120": Bajonett-Verschluss
- 130: Ringmutter
- 132: Innengewinde
- 135: zweite Schrauben
- 138: äußerer Flansch
- 140: Druckring
- 150: Zwischenring
- 152: innerer Flansch des Zwischenringes
- 160: Druckmesszelle
- 170: Zusatzring
- 190: Füllring
- 200: Lager
- 310: Walzenzapfen, insbesondere erster ringförmiger Abschnitt des Walzenzapfens
- 315: walzenballennaher Anschlag in Walzenzapfen
- 320: Walzenabsatz (= zweiter ringförmiger Abschnitt des Walzenzapfens)
- 325: Passfeder
- 326: axiale Nut
- 330: Walzenballen
- R: axiale Richtung

## Patentansprüche

1. Lagerverschlussvorrichtung (100) zur Befestigung mindestens eines Lagers (200) auf einem Walzenzapfen (310) einer Walze, wobei das Lager (200) ausgebildet ist zum Lagern der Walze in einem Walzgerüst und wobei die Lagerverschlussvorrichtung (100) aufweist:
einen auf den Walzenzapfen (310) aufschiebbaren und axial verschiebbar gelagerten Gewindering (110) mit einem Außengewinde (112);
einen walzenballenfernen Anschlag (120) und walzenballennahen Anschlag (315) zum Begrenzen der axialen Bewegung des Gewinderings (110); und eine Ringmutter (130) mit einem Innengewinde (132) zum Aufschrauben auf das Außengewinde (112) des Gewinderings (110);
**dadurch gekennzeichnet,**
**dass** zwischen dem Lager und dem Gewindering (110) ein Druckring (140) vorgesehen ist, welcher ebenfalls in axialer Richtung (R) verschiebbar gelagert ist, und welcher in radialer Richtung sowohl mit dem Gewindering (110) wie auch mit der Ringmutter (130) zumindest teilweise überlappt;
**dass** in dem Gewindering (110) - über dessen Umfang verteilt - mehrere Schrauben (115) in axialen Gewindebohrungen drehbar gelagert sind zum Drücken in axialer Richtung (R) gegen den Druckring (140); und
**dass** die Ringmutter (130) in axialer Richtung gegen den Druckring (140) schraubbar und anstellbar ist.

2. Lagerverschlussvorrichtung (100) nach Anspruch 1,
**gekennzeichnet durch**
einen ringförmigen Zwischenring (150); und
Schrauben (135), welche direkt oder indirekt mit dem Zwischenring (150) und der Ringmutter (130) in Verbindung stehen zum Aufbau einer axialen Kraft zwischen dem Zwischenring (150) und der Ringmutter (130) für das axiale Abziehen des Lagers (200).

3. Lagerverschlussvorrichtung (100) nach Anspruch 2,
**dadurch gekennzeichnet,**
**dass** die Ringmutter (130) einen radial nach außen ragenden Flansch (138) aufweist;
**dass** der ringförmige Zwischenring (150) in seinem radialen Innenbereich einen sich axial und radial erstreckenden inneren Flansch (152) aufweist, welcher ausgebildet ist, den äußeren Flansch (138) der Ringmutter (130) derart zu übergreifen, dass sich die ballenferne Stirnseite des Flansches (138) der Ringmutter (130) und die ballennahe Stirnseite des Flansches (152) des Zwischenring (150) gegenüberstehen; und
**dass** die Schrauben (135) in axiale Gewindebohrungen in dem Flansch (152) des Zwischenrings (150) einschraubbar sind zum Aufbau der axialen Kraft zwischen dem Zwischenring (150) und der Ringmutter (130) durch Abstützen der Schrauben (135) an dem äußeren Flansch (138) der Ringmutter (130).

4. Lagerverschlussvorrichtung (100) nach Anspruch 2,
**dadurch gekennzeichnet,**
**dass** die Ringmutter (130) einen radial nach außen ragenden Flansch (138) aufweist, welcher über seinen Umfang verteilt eine Mehrzahl von axial ausgerichteten Bohrungen aufweist;
**dass** der ringförmige Zwischenring (150) mit seinem radialen Innenbereich der ballennahen Stirnseite des äußeren Flansches (138) der Ringmutter (130) gegenübersteht und an seinem radialen Innenbereich über seinen Umfang verteilt eine Mehrzahl von axial ausgerichteten Bohrungen mit Innengewinde aufweist, wobei die Bohrungen in dem Zwischenring (150) mit den Bohrungen in dem Flansch (138) der Ringmutter (130) fluchten; und
**dass** die Schrauben (135) durch die Bohrungen in dem Flansch (138) der Ringmutter (130) hindurchführbar und in die Bohrungen in dem Zwischenring einschraubbar sind zum Aufbau der Kraft zwischen dem Zwischenring (150) und der Ringmutter (130) zum Lösen des Lagers (200) von dem Walzenzapfen (310), wobei sich die Schrauben (135) mit ihren Schraubenköpfen an dem Flansch (138) abstützen.

5. Lagerverschlussvorrichtung (100) nach Anspruch 2,
**dadurch gekennzeichnet,**
**dass** ein Zusatzring (170) vorgesehen ist zum axialen Aufsetzen auf die ballenferne Stirnseite der Ringmutter (130), wobei der Zusatzring (170) an seiner Peripherie über seinen Umfang verteilt eine Mehrzahl von axial ausgerichteten Bohrungen aufweist, welche radial außerhalb der Ringmutter (130) ausgebildet sind;
**dass** der ringförmige Zwischenring (150) mit seinem radialen Innenbereich der ballennahen Stirnseite der Peripherie des Zusatzringes (170) gegenübersteht und an seinem radialen Innenbereich über seinen Umfang verteilt eine Mehrzahl von axial ausgerichteten Bohrungen mit Innengewinden aufweist, wobei die Bohrungen in dem Abschlussdeckel (140) mit den Bohrungen in dem Zusatzring (170) fluchten; und
**dass** die Schrauben (135) durch die Bohrungen in dem Zusatzring hindurchführbar und in die Bohrungen in dem Abschlussdeckel einschraubbar sind zum Aufbau der Kraft zwischen dem Zwischenring (150), der Ringmutter (130) und dem Zusatzring (170) zum Lösen des Lagers (200) von dem Walzenzapfen (310), wobei sich die Schrauben (135) mit ihren Schraubenköpfen an dem Zusatzring (170) abstützen.

6. Lagerverschlussvorrichtung (100) nach einem der vorangegangenen Ansprüche,
**dadurch gekennzeichnet,**
**dass** der walzenballenferne Anschlag (120) für den Gewindering (110) durch einen Klappring (120') gebildet ist, welcher in eine umlaufende Nut in dem Walzenzapfen (310) axial fixiert einsetzbar ist.

7. Lagerverschlussvorrichtung (100) nach einem der Ansprüche 1 bis 5,
**dadurch gekennzeichnet,**
**dass** der walzenballenferne Anschlag (120) für den Gewindering (110) durch einen Bajonett-Verschluss (120") gebildet ist, welcher in axialer Richtung (R) auf dem Walzenzapfen (320) axial fixierbar ist.

8. Lagerverschlussvorrichtung (100) nach einem der Ansprüche 1 bis 7,
**dadurch gekennzeichnet,**
**dass** der Längsabschnitt des Gewinderings (110) mit dem Außengewinde (112) einen ersten sich in axialer Richtung erstreckenden ringförmigen Abschnitt (111) des Gewinderings repräsentiert;
**dass** der Gewindering (110) an seinem dem Lager (200) zugewandten Ende eine Verlängerung aufweist, welche einen zweiten sich in axialer Richtung erstreckenden ringförmigen Abschnitt (113) des Gewinderings (110) repräsentiert; und
**dass** der Druckring (140) auf dem zweiten ringförmigen Abschnitt (113) des Gewinderings (110) in axialer Richtung verschiebbar gelagert ist.

9. Lagerverschlussvorrichtung (100) nach Anspruch 8,
**dadurch gekennzeichnet,**
**dass** der zweite ringförmige Abschnitt (113) mit einem kleineren Durchmesser ausgebildet ist als der erste ringförmige Abschnitt (111), wodurch zwischen dem ersten und dem zweiten Abschnitt (113) ein Absatz in dem Gewindering (110) ausgebildet ist als walzenballenferner Anschlag (117) für den Druckring (140).

10. Lagerverschlussvorrichtung (100) nach einem der vorangegangenen Ansprüche,
**dadurch gekennzeichnet,**
**dass** der Druckring (140) eine Druckmesszelle (160) aufweist zum Erfassen der tatsächlich aufgebrachten Aufziehkraft.

11. System umfassend eine einen Walzzapfen aufweisende Walze und eine Lagerverschlussvorrichtung (100 nach einem der vorangegangenen Ansprüche, **dadurch gekennzeichnet,**
**dass** der Walzenzapfen (310) an seinem walzenballenfernen Ende in Form eines Walzenabsatzes (320) mit reduziertem Durchmesser ausgebildet ist, wobei der Gewindering (110) auf dem Walzenabsatz (320) axial verschiebbar gelagert und der walzenballenferne Anschlag (120) für den Gewindering (110) auf dem Walzenabsatz (320) axial festgelegt ist; und
**dass** der walzenballennahe Anschlag (315) für den Gewindering gebildet ist durch einen Absatz in dem Walzenzapfen im Übergangsbereich zu dem Walzenabsatz.

12. System nach Anspruch 11,
**dadurch gekennzeichnet,**
**dass** zwischen dem Anschlag (315) in dem Walzenzapfen und dem Gewindering (110) ein Füllring (190) auf dem Walzenzapfen verschiebbar gelagert ist, wobei die radiale Höhe des Zwischenrings beispielsweise der Differenz zwischen dem Durchmesser des Walzenzapfens und dem Durchmesser des Walzenabsatzes entspricht.

13. System nach einem der Ansprüche 11 oder 12,
**dadurch gekennzeichnet,**
**dass** der Druckring (140) zumindest teilweise auf dem Walzenzapfen und/oder auf dem Füllring (190) und/oder auf dem Gewindering (110) in axialer Richtung verschiebbar gelagert ist.

14. Verfahren zum Aufziehen eines Lagers (200) auf den Walzenzapfen (310) einer Walze mit Hilfe der Lagerverschlussvorrichtung (100) nach einem der vorangegangenen Ansprüche 1-10, aufweisend folgende Schritte:
Vorpositionieren des Lagers (200) walzenballennäher und der Lagerverschlussvorrichtung (100) walzenballenferner auf dem Walzenzapfen (310); Axiales Fixieren des walzenballenfernen Anschlags (120', 120") auf dem Walzenzapfen (310);
Weiteres Aufziehen des Lagers (200) auf den Walzenzapfen (310) durch axiales Verschieben des Druckrings (140) und damit des Lagers (200) in Richtung Walzenballen (330) durch Einschrauben der Schrauben (115) in die axialen Gewindebohrungen in dem Gewindering (110) gegen den Druckring (140), wobei sich der Gewindering an dem walzenballenfernen axial fixierten Anschlag (120', 120") abstützt;
Drehen der Ringmutter (130) auf dem Außengewinde (112) des Gewinderings (110), bis sie an den Druckring (140) anschlägt;
Verriegeln der Ringmutter (130) in ihrer Anschlagposition gegen den Druckring (140); und
Zurückdrehen der Schrauben (115) von dem Druckring (140).

15. Verfahren nach Anspruch 14,
**dadurch gekennzeichnet,**
**dass** die Schrauben (115) in den Gewindebohrungen zum Aufziehen des Lagers (200) jeweils bis zu einem vorbestimmten Drehmoment oder bis zu einer vorbestimmten Aufziehkraft angezogen werden; und
**dass** die Ringmutter (130) erst dann zur Anlage gegen Druckring (140) gebracht wird, nachdem die Schrauben (115) mit dem vorbestimmten Drehmoment oder der vorbestimmten Aufziehkraft angezogen wurden.

16. Verfahren zum Abziehen eines Lagers (200) von dem Walzenzapfen (310) der Walze mit Hilfe der Lagerverschlussvorrichtung (100) nach einem der Ansprüche 1 bis 10 nachdem das Lager (200) zuvor beispielsweise gemäß dem Verfahren nach einem der Ansprüche 14 bis 15 auf den Walzenzapfen aufgezogen wurde, aufweisend folgende Schritte:
Verschieben des Druckrings (140) - und damit des Lagers (200) - ein stückweit in Richtung Walzenballen (330) zum Abbauen der axialen Vorspannung zwischen der Ringmutter (130) und dem Druckring (140) durch Einschrauben der Schrauben (115) in die axialen Gewindebohrungen in dem Gewindering (110) gegen den Druckring (140), wobei sich der Gewindering an dem axial fixierten walzenballenfernen Anschlag (120', 120") abstützt;
Entriegeln und Zurückdrehen der Ringmutter (130) in axialer Richtung (R) weg von dem Walzenballen;
Zurückdrehen der Schrauben (115);
Anziehen der Schrauben (135) zum Aufbau einer Kraft zwischen dem Zwischenring (150) und der Ringmutter (130) zum Lösen bzw. Abziehen des Lagers (200) von dem Walzenzapfen (310), wobei der Gewindering, welcher über sein Außengewinde (112) mit der Ringmutter (130) in Eingriff steht, ein stückweit in axialer Richtung (R) auf den Walzenballen (330) hin verschoben wird und sich über einen walzenballennahen Anschlag (315, 325 mit 326) in dem Walzenzapfen abstützt;
Entfernen des walzenballenfernen Anschlags (120', 120"); und
axiales Abziehen des gelösten Lagers (200) zusammen mit der Lagerverschlussvorrichtung (100) - beispielsweise mit Hilfe eines Krans - von dem Walzenzapfen.

## Claims

1. Bearing closure device (100) for securing at least one bearing (200) on a roll journal (310) of a roll, wherein the bearing (200) is constructed for mounting the roll in a roll stand and wherein the bearing closure device (100) comprises:
a threaded ring (110), which is pushable onto the roll journal (310) and mountable thereon to be axially displaceable, with an external thread (112);
a stop (120), which is remote from the roll barrel, and a stop (315) which is adjacent to the roll barrel, for limiting the axial movement of the threaded ring (110); and
an annular nut (130) with an internal thread (132) for screwing onto the external thread (112) of the threaded ring (110);
**characterised in that**
a pressure ring (140), which is similarly mounted to be displaceable in axial direction (R) and which in radial direction at least partly overlaps not only the threaded ring (110), but also the annular nut (130), is provided between the bearing and the threaded ring (110);
several screws (115) distributed over the circumference of the threaded ring (110) are rotatably mounted in the threaded ring in axial threaded bores for pressing in axial direction (R) against the threaded ring (140); and
the annular nut (130) can be screwed and adjusted in axial direction against the pressure ring (140).

2. Bearing closure device (100) according to claim 1,
**characterised by**
an annular intermediate ring (150); and
screws (135) connected directly or indirectly with the intermediate ring (150) and the annular nut (130) to build up an axial force between the intermediate ring (150) and the annular nut (130) for axially drawing off the bearing (200).

3. Bearing closure device (100) according to claim 2,
**characterised in that**
the annular nut (130) has a radially outwardly projecting flange (138);
the annular intermediate ring (150) has in its radially inner region an axially and radially extending inner flange (152) which is constructed to engage over the outer flange (138) of the annular nut (130) in such a way that the end, which is remote from the barrel, of the flange (138) of the annular nut (130) and the end, which is adjacent to the barrel, of the flange (152) of the intermediate ring (150) are opposite one another; and
the screws (135) can be screwed into axial threaded bores in the flange (152) of the intermediate ring (150) to build up the axial force between the intermediate ring (150) and the annular nut (130) by support of the screws (135) on the outer flange (138) of the annular nut (130).

4. Bearing closure device (100) according to claim 2,
**characterised in that**
the annular nut (130) has an radially outwardly projecting flange (138) which has a plurality of axially oriented bores distributed over its circumference;
the annular intermediate ring (150) at its radial inner region is opposite the end, which is adjacent to the barrel, of the outer flange (138) of the annular nut (130) and at its radially inner region has a plurality of axially oriented bores, which are distributed over its circumference, with internal threads, wherein the bores in the intermediate ring (150) are aligned with the bores in the flange (138) of the annular nut (130); and
the screws (135) can be passed through the bores in the flange (138) of the annular nut (130) and screwed into the bores in the intermediate ring to build up the force between the intermediate ring (150) and the annular nut (130) for releasing the bearing (200) from the roll journal (310), wherein the screws (135) are supported by the screw heads thereof on the flange (138).

5. Bearing closure device (100) according to claim 2,
**characterised in that**
an auxiliary ring (170) is provided for axial positioning on the end, which is remote from the barrel, of the annular nut (130), wherein the auxiliary ring (170) has at its periphery a plurality of axially oriented bores which distributed over the circumference of the auxiliary ring and which are formed radially outwardly of the annular nut (130);
the annular intermediate ring (150) by its radial inner region is opposite the end, which is adjacent to the barrel, of the periphery of the auxiliary ring (170) and has at its radially inner region a plurality of axially oriented bores, which are distributed over the circumference of the auxiliary ring, with internal threads, where the bores in the closure cover (140) are aligned with the bores in the auxiliary ring (170); and
the screws (135) can be passed through the bores in the auxiliary ring and screwed into the bores in the closure cover for build up of the force between the intermediate ring (150), the annular nut (130) and the auxiliary ring (170) for releasing the bearing (200) from the roll journal (310), wherein the screws (135) are supported by the screw heads thereof on the auxiliary ring (170).

6. Bearing closure device (100) according to any one of the preceding claims,
**characterised in that**
the stop (120), which is remote from the roll barrel, for the threaded ring (110) is formed by a hinged ring (120') which is insertable into an encircling groove in the roll journal (310) to be axially fixed.

7. Bearing closure device (100) according to any one of claims 1 to 5,
**characterised in that**
the stop (120), which is remote from the roll barrel, for the threaded ring (110) is formed by a bayonet coupling (120") which is axially fixable on the roll journal (320) in axial direction (R).

8. Bearing closure device (100) according to any one of claims 1 to 7,
**characterised in that**
the longitudinal section of the threaded ring (110) together with the external thread (112) represents a first annular section (111), which extends in axial direction, of the threaded ring; the threaded ring (110) has at its end facing the bearing (200) an extension which represents a second annular section (113), which extends in axial direction, of the threaded ring (110); and
the pressure ring (140) is mounted on the second annular section (113) of the threaded ring (110) to be displaceable in axial direction.

9. Bearing closure device (100) according to claim 8,
**characterised in that**
the second annular section (113) is formed with a smaller diameter than the first annular section (111), whereby a shoulder is formed in the threaded ring (110) between the first and the second section (113) as stop (117), which is remote from the roll barrel, for the pressure ring (140).

10. Bearing closure device (100) according to any one of the preceding claims,
**characterised in that**
the pressure ring (140) has a pressure measuring cell (160) for detecting the actually applied drawing-on force.

11. System comprising a roll, which has a roll journal, and a bearing closure device (100) according to any one of the preceding claims,
**characterised in that**
the roll journal (310) is constructed at its end, which is remote from the roll barrel, in the form of a roll shoulder (320) with reduced diameter, wherein the threaded ring (110) is mounted on the roll shoulder (320) to be axially displaceable and the stop (120), which is remote from the roll barrel, for the threaded ring (110) is axially fixed on the roll shoulder (320); and
the stop (315), which is adjacent to the roll barrel, for the threaded ring is formed by a shoulder in the roll journal in the region of transition to the roll shoulder.

12. System according to claim 11,
**characterised in that**
a filling ring (190) is mounted on the roll journal between the stop (315) in the roll journal and the threaded ring (110) to be displaceable, wherein the radial height of the intermediate ring corresponds with, for example, the difference between the diameter of the roll journal and the diameter of the roll shoulder.

13. System according to one of claims 11 and 12,
**characterised in that**
the pressure ring (140) is mounted at least partly on the roll journal and/or on the filling ring (190) and/or on the threaded ring (110) to be displaceable in axial direction.

14. Method for drawing a bearing (200) onto the roll journal (310) of a roll with the help of the bearing closure device (100) according to any one of the preceding claims 1 to 10, comprising the following steps:
pre-positioning the bearing (200) adjacent to the roll barrel and the bearing closure device (100) remote from the roll barrel on the roll journal (310);
axially fixing the stop (120', 120"), which is remote from the roll barrel, on the roll journal (310); further drawing of the bearing (200) onto the roll journal (310) by axial displacement of the pressure ring (140) and thus of the bearing (200) in the direction of the roll barrel (330) by screwing the screws (115) into the axial threaded bores in the threaded ring (110) against the pressure ring (140), wherein the threaded ring is supported on the axially fixed stop (120', 120") remote from the roll barrel;
turning the annular nut (130) on the external thread (112) of the threaded ring (140) until it abuts the pressure ring (140);
locking the annular nut (130) in its abutment position against the pressure ring (140); and
turning the screws (115) back from the pressure ring (140).

15. Method according to claim 14,
**characterised in that**
the screws (115) are tightened in the threaded bores for drawing-on the bearing (200) in each instance up to a predetermined torque or up to a predetermined drawing-on force; and
the annular nut (130) is mounted for contact with the pressure ring (140) only after the screws (115) have been tightened to the predetermined torque or the predetermined drawing-on force.

16. Method for drawing a bearing (200) off the roll journal (310) of the roll with the help of the bearing closure device (100) according to any one of claims 1 to 10 after the bearing (200) has been previously tightened on the roll journal in accordance with, for example, the method according to one of claims 14 and 15, comprising the following steps:
displacing the pressure ring (140) and thus the bearing (200) some distance in the direction of the roll barrel (330) for build up of the axial bias between the annular nut (130) and the pressure ring (140) by screwing the screws (115) into the axial threaded bores in the threaded ring (110) against the pressure ring (140), wherein the threaded ring is supported on the axially fixed stop (120', 120") remote from the roll barrel;
unlocking and turning back the annular nut (130) in axial direction (R) away from the roll barrel; turning back the screws (115);
tightening the screws (135) for build up of a force between the intermediate ring (150) and the annular nut (130) for releasing or drawing-off the bearing (200) from the roll journal (310), wherein the threaded ring, which is engaged by way of its external thread (112) with the annular nut (130), is displaced some distance in axial direction (R) towards the roll barrel (330) and is supported in the roll journal by way of a stop (315, 325 with 326) adjacent to the roll barrel;
removing the stop (120', 120") remote from the roll barrel; and
axial drawing off the released bearing (200) together with the bearing closure device (100), for example with the help of a crane, from the roll journal.

## Revendications

1. Dispositif de verrouillage de palier (100) pour la fixation d'au moins un palier (200) sur un tourillon (310) d'un cylindre, dans lequel le palier (200) est conçu pour supporter le cylindre dans une cage de laminoir et dans lequel le dispositif de verrouillage de palier (100) comprend :
une bague filetée (110) avec un filetage extérieur (112), pouvant être enfilée sur le tourillon (310) et logée de manière à pouvoir se déplacer axialement ;
une butée (120) éloignée de la table de cylindre et une butée (315) proche de la table de cylindre pour limiter le mouvement axial de la bague filetée (110) ; et un écrou annulaire (130) avec un filetage intérieur (132) destiné à être engagé sur le filetage extérieur (112) de la bague filetée (110) ;
**caractérisé en ce que**
entre le palier et la bague filetée (110) il est prévu une bague de pression (140) qui est également montée de manière à pouvoir se déplacer dans une direction axiale (R) et qui chevauche au moins partiellement dans une direction radiale aussi bien la bague filetée (110) que l'écrou annulaire (130) ;
dans la bague filetée (110) - réparties sur sa circonférence - plusieurs vis (115) sont logées de façon à pouvoir tourner dans des alésages taraudés axiaux pour exercer une pression dans le sens axial (R) contre la bague de pression (140) ;
et l'écrou annulaire (130) peut être vissé et réglé dans le sens axial contre la bague de pression (140).

2. Dispositif de verrouillage de palier (100) selon la revendication 1,
**caractérisé par**
une bague intermédiaire annulaire (150) ; et
des vis (135) qui sont directement ou indirectement reliées à la bague intermédiaire (150) et à l'écrou annulaire (130) pour créer une force axiale entre la bague intermédiaire (150) et l'écrou annulaire (130) pour le retrait axial du palier (200).

3. Dispositif de verrouillage de palier (100) selon la revendication 2,
**caractérisé en ce que**
l'écrou annulaire (130) comporte une bride (138) faisant saillie radialement vers l'extérieur ;
la bague intermédiaire annulaire (150) comporte dans sa zone intérieure radiale une bride intérieure (152) s'étendant axialement et radialement, qui est conçue pour recouvrir la bride extérieure (138) de l'écrou annulaire (130) de telle sorte que la face frontale de la bride (138) de l'écrou annulaire (130) la plus éloignée de la table de cylindre et la face frontale de la bride (152) de la bague intermédiaire (150) la plus proche de la table de cylindre se trouvent en face l'une de l'autre ; et
les vis (135) peuvent être vissées dans des alésages taraudés axiaux dans la bride (152) de la bague intermédiaire (150) pour développer la force axiale entre la bague intermédiaire (150) et l'écrou annulaire (130) en faisant les vis (135) s'appuyer contre la bride extérieure (138) de l'écrou annulaire (130).

4. Dispositif de verrouillage de palier (100) selon la revendication 2,
**caractérisé en ce que**,
l'écrou annulaire (130) comporte une bride (138) faisant saillie radialement vers l'extérieur, qui présente, répartis sur sa circonférence, une pluralité d'alésages orientés axialement ;
la bague intermédiaire annulaire (150) avec sa zone intérieure radiale fait face à la face frontale de la bride extérieure (138) de l'écrou annulaire (130) la plus proche de la table de cylindre et présente sur sa zone intérieure radiale, répartis sur sa circonférence, une pluralité d'alésages orientés axialement avec un filetage intérieur, lesdits alésages dans la bague intermédiaire (150) étant alignés avec les alésages dans la bride (138) de l'écrou annulaire (130) ; et
les vis (135) peuvent être passées à travers les alésages dans la bride (138) de l'écrou annulaire (130) et vissées dans les alésages de la bague intermédiaire pour créer une force entre la bague intermédiaire (150) et l'écrou annulaire (130) afin de détacher le palier (200) du tourillon (310), les vis (135) s'appuyant avec leurs têtes sur la bride (138).

5. Dispositif de verrouillage de palier (100) selon la revendication 2,
**caractérisé en ce que**,
une bague supplémentaire (170) est prévue pour être placée axialement sur la face frontale de l'écrou annulaire (130) éloignée de la table de cylindre, ladite bague supplémentaire (170) présentant sur sa périphérie, répartis sur sa circonférence, une pluralité d'alésages orientés axialement, qui sont formés radialement à l'extérieur de l'écrou annulaire (130) ;
la bague intermédiaire annulaire (150) avec sa zone intérieure radiale fait face à la face frontale proche de la table de cylindre de la périphérie de la bague supplémentaire (170) et présente, sur sa zone intérieure radiale, répartis sur sa circonférence, une pluralité d'alésages orientés axialement avec des filetages intérieurs, les alésages dans la bague intermédiaire (150) étant alignés avec les alésages dans la bague supplémentaire (170) ; et
les vis (135) peuvent être passées à travers les alésages dans la bague supplémentaire et vissées dans les alésages de la bague intermédiaire pour créer une force entre la bague intermédiaire (150), l'écrou annulaire (130) et la bague supplémentaire (170) afin de détacher le palier (200) du tourillon (310), les vis (135) s'appuyant avec leurs têtes sur la bague supplémentaire (170).

6. Dispositif de verrouillage de palier (100) selon l'une des revendications précédentes,
**caractérisé en ce que**,
la butée (120) éloignée de la table de cylindre pour la bague filetée (110) est formée d'une bague rabattable (120') qui peut être insérée de façon axialement fixe dans une rainure périphérique dans le tourillon (310).

7. Dispositif de verrouillage de palier (100) selon l'une des revendications 1 à 5,
**caractérisé en ce que**
la butée (120) éloignée de la table de cylindre pour la bague filetée (110) est formé d'un verrouillage à baïonnette (120"), qui peut être fixé axialement dans une direction axiale (R) sur le tourillon (320).

8. Dispositif de verrouillage de palier (100) selon l'une des revendications 1 à 7,
**caractérisé en ce que**
la section longitudinale de la bague filetée (110) avec le filetage extérieur (112) représente une première section annulaire (111) de la bague filetée s'étendant dans une direction axiale ;
la bague filetée (110) comporte, à son extrémité tournée vers le palier (200), un prolongement qui représente une seconde section annulaire (113) de la bague filetée (110) s'étendant dans une direction axiale ; et
la bague de pression (140) est montée sur la seconde section annulaire (113) de la bague filetée (110) de manière à pouvoir se déplacer dans une direction axiale.

9. Dispositif de verrouillage de palier (100) selon la revendication 8,
**caractérisé en ce que**,
la seconde section annulaire (113) est formée avec un diamètre inférieur à celui de la première section annulaire (111), de telle sorte qu'entre la première et la seconde section (113), un épaulement est formé dans la bague filetée (110) pour servir comme butée (117) éloignée de la table de cylindre pour la bague de pression (140).

10. Dispositif de verrouillage de palier (100) selon l'une des revendications précédentes,
**caractérisé en ce que**,
la bague de pression (140) comporte une cellule de mesure de pression (160) pour détecter la force d'enfilage effectivement appliquée.

11. Un système comprenant un cylindre qui comporte un tourillon et un dispositif de verrouillage de palier (100) selon l'une des revendications précédentes,
**caractérisé en ce que**
le tourillon (310) est réalisé, à son extrémité éloignée de la table de cylindre, sous la forme d'un épaulement de cylindre (320) de diamètre réduit, dans lequel la bague filetée (110) est montée de manière à pouvoir coulisser axialement sur l'épaulement de cylindre (320) et la butée (120) éloignée de la table de cylindre pour la bague filetée (110) est fixée axialement sur l'épaulement de cylindre (320) ; et
la butée (315) proche de la table de cylindre pour la bague filetée est formée d'un épaulement dans le tourillon dans la zone de transition vers l'épaulement de cylindre.

12. Système selon la revendication 11,
**caractérisé en ce que**
entre la butée (315) dans le tourillon et la bague filetée (110), une bague pleine (190) est montée de manière à pouvoir coulisser sur le tourillon, dans lequel la hauteur radiale de la bague intermédiaire correspond, par exemple, à la différence entre le diamètre du tourillon et le diamètre de l'épaulement de cylindre.

13. Système selon l'une des revendications 11 ou 12,
**caractérisé en ce que**
la bague de pression (140) est montée au moins partiellement sur le tourillon et/ou sur la bague pleine (190) et/ou sur la bague filetée (110) de manière à pouvoir se déplacer dans une direction axiale.

14. Procédé pour monter un palier (200) sur le (310) d'un cylindre, à l'aide du dispositif de verrouillage de palier (100) selon l'une des revendications précédentes 1 à 10, comprenant les étapes suivantes :
Pré-positionnement du palier (200) plus proche de la table de cylindre et du dispositif de verrouillage de palier (100) plus éloigné de la table de cylindre sur le tourillon (310) ;
Fixation axiale de la butée (120', 120") éloignée de la table de cylindre sur le tourillon (310) ;
Poursuite du montage du palier (200) sur le tourillon (310) en déplaçant axialement la bague de pression (140) et donc le palier (200) en direction de la table de cylindre (330) et en vissant les vis (115) dans les alésages taraudés axiaux dans la bague filetée (110) contre la bague de pression (140), ladite bague filetée s'appuyant sur la butée (120', 120") fixée axialement à l'écart de la table de cylindre ;
Rotation de l'écrou annulaire (130) sur le filetage extérieur (112) de la bague filetée (110) jusqu'à ce qu'elle bute contre la bague de pression (140) ;
Verrouillage de l'écrou annulaire (130) dans sa position de butée contre la bague de pression (140) ; et
Serrage des vis (115) de la bague de pression (140).

15. Procédé selon la revendication 14,
**caractérisé en ce que**
les vis (115) dans les alésages taraudés pour le montage du palier (200) sont serrées chacune jusqu'à un couple prédéterminé ou une force de serrage prédéterminée ; et
l'écrou annulaire (130) n'est amené en butée contre la bague de pression (140) qu'après que les vis (115) ont été serrées avec le couple prédéterminé ou la force de serrage prédéterminée.

16. Procédé pour retirer un palier (200) du tourillon (310) d'un cylindre, à l'aide du dispositif de verrouillage de palier (100) selon l'une des revendications précédentes 1 à 10, après que le palier (200) a été préalablement monté sur le tourillon, par exemple suivant le procédé selon l'une des revendications 14 à 15, comprenant les étapes suivantes :
Déplacement de la bague de pression (140) - et donc du palier (200) - sur une certaine distance en direction de la table de cylindre (330) pour supprimer la précontrainte axiale entre l'écrou annulaire (130) et la bague de pression (140) en vissant les vis (115) dans les alésages taraudés axiaux dans la bague filetée (110) contre la bague de pression (140), ladite bague filetée s'appuyant sur la butée (120', 120") fixée axialement à l'écart de la table de cylindre ;
Déverrouillage et serrage de l'écrou annulaire (130) dans une direction axiale (R) en l'éloignant de la table de cylindre ;
Revissage des vis (115) ;
Serrage des vis (135) pour créer une force entre la bague intermédiaire (150) et l'écrou annulaire (130) afin de desserrer ou retirer le palier (200) du tourillon (310), dans lequel la bague filetée, qui est en prise avec l'écrou annulaire (130) par l'intermédiaire de son filetage extérieur (112), est déplacée sur une certaine distance dans une direction axiale (R) vers la table de cylindre (330) et s'appuie sur une butée (315, 325 avec 326) proche de la table de cylindre dans le tourillon.
Retrait de la butée (120', 120") éloignée de la table de cylindre ; et
Retrait axial du palier desserré (200) conjointement avec le dispositif de verrouillage de palier (100) - par exemple à l'aide d'une grue - du tourillon.
